Europäisches Patentamt

European Patent Office

Office européen des brevets

(19)

(11) Numéro de publication: **0 253 707 B1**

## (12) FASCICULE DE BREVET EUROPEEN

(45) Date de publication du fascicule du brevet: 26.09.90

(21) Numéro de dépôt: 87401501.9

(22) Date de dépôt: 30.06.87

(51) Int. Cl.⁵: **F16D 55/224**, F16B 39/10

(54) Dispositif de sécurité au dévissage pour organe de coulissement de frein à disque.

(30) Priorité: 16.07.86 FR 8610347

(43) Date de publication de la demande:
20.01.88 Bulletin 88/3

(45) Mention de la délivrance du brevet:
26.09.90 Bulletin 90/39

(84) Etats contractants désignés:
DE ES GB IT

(56) Documents cités:
EP-A- 0 147 522
DE-A- 2 619 984
FR-A- 2 518 201
FR-A- 2 550 836
GB-A- 2 128 277
GB-A- 2 160 600

(73) Titulaire: BENDIX France Société Anonyme dite:,
126, rue de Stalingrad, F-93700 Drancy(FR)

(72) Inventeur: Le Deit, Gérard, 38, rue Aimé Fluttaz,
F-77181 Courtry(FR)
Inventeur: Gerard, Jean-Louis, 129 Boulevard Massena,
F-75013 Paris(FR)

(74) Mandataire: Lejet, Christian et al, BENDIX FRANCE
Division Technique Service Brevets Bendix
Europe 126 rue de Stalingrad, F-93700 Drancy(FR)

ACTORUM AG

## Description

La présente invention est relative à un frein à disque à étrier coulissant sur un support fixe, un organe de coulissement étant fixé par vissage sur l'étrier ou le support fixe.

Un tel frein peut comprendre, classiquement, un étrier monté coulissant au moyen d'au moins un organe de coulissement tel qu'une colonnette axiale, sur un support fixe dans lequel sont reçus, en ancrage et en coulissement, deux éléments de friction susceptibles de venir en engagement de friction avec les faces opposées d'un disque tournant sous l'action d'un moteur de frein agissant directement sur l'un des éléments de friction et agissant sur l'autre élément de friction par réaction au travers de l'étrier coulissant.

Chaque colonnette est montée sur le support fixe par vissage d'une extrémité filetée de cette colonnette dans un alésage fileté complémentaire, percé dans le support fixe.

Sous l'effet des vibrations supportées par le frein, il peut arriver à la longue que l'extrémités filetée se dévisse plus ou moins complètement.

Un dévissage partiel a pour conséquence l'introduction de jeux préjudiciables au bon fonctionnement du frein. Un simple resserrage de la partie filetée, opéré à temps, permet cependant de rétablir le fonctionnement normal du frein.

Un dévisage complet de la partie filetée peut avoir de graves conséquences: chute et perte de la colonnette, basculement de l'étrier et percussion de cet étrier contre la roue associée, lorsque le véhicule circule. Il en résulte un défaut de sécurité de freinage et des dommages sérieux aux organes touchés par cette défaillance.

La présente invention a pour but de réaliser un dispositif de sécurité au dévissage qui, associé à un organe de coulissement de frein à disque, permet d'empêcher de tels évènements.

L'invention concerne donc un frein à disque à étrier coulissant sur un support fixe et comportant deux éléments de friction reçus dans ledit support fixe et susceptibles de venir en engagement de friction avec les faces opposées d'un disque tournant sous l'action d'un moteur de frein agissant directement sur l'un des éléments de friction et agissant sur l'autre élément de friction par réaction au travers de l'étrier coulissant, un organe de coulissement étant fixé par vissage d'une partie filetée sur l'étrier ou le support fixe, cet organe étant reçu en coulissement dans un alésage correspondant formé dans le support fixe ou l'étrier, respectivement.

Selon l'invention, le frein comprend un dispositif de sécurité au dévissage de l'organe de coulissement comportant un capuchon monté coaxialement sur l'organe de coulissement de manière à être solidaire en rotation de cet organe et des moyens de butée répartis entre le capuchon et le corps du frein de manière qu'une rotation limitée de l'organe de coulissement à partir de sa position de vissage serré, provoque la mise en butée de ces moyens et l'arrêt du dévissage de l'organe.

On connaît du document GB-A 2 160 600 l'utilisation d'un capuchon disposé sur l'organe de coulissement permettant d'éviter la corrosion de cet organe. Toutefois, ce capuchon n'évite nullement un éventuel dévissage intempestif de cet organe.

Grâce au dispositif suivant l'invention, un dévissage éventuel de l'organe de coulissement reste limité à un petit angle, qui n'entraîne pas une défaillance du frein. On évite en outre la perte de sécurité consécutive à un dévissage complet de cet organe, et les dommages qui en résultent pour le frein lui-même et pour la roue de véhicule associée.

D'autres avantages et caractéristiques de la présente invention apparaîtront à la lecture de la description qui va suivre, associée à l'examen du dessin annexé dans lequel :

- la Figure 1 est une vue de face, en coupe partielle suivant le trait de coupe C-C de la Figure 2, d'un frein à disque équipé du dispositif suivant l'invention ;
- la Figure 2 est une vue de dessus du frein à disque de la Figure 1 dont certaines portions sont représentées en coupes partielles suivant les traits de coupe A-A et B-B de la Figure 1 ;
- la Figure 3 est une vue agrandie, suivant le trait de coupe D-D de la Figure 4, du dispositif suivant l'invention incorporé au frein des Figures 1 et 2 ;
- la Figure 4 est une vue agrandie en coupe partielle suivant le trait E-E de la Figure 3, du dispositif suivant l'invention.

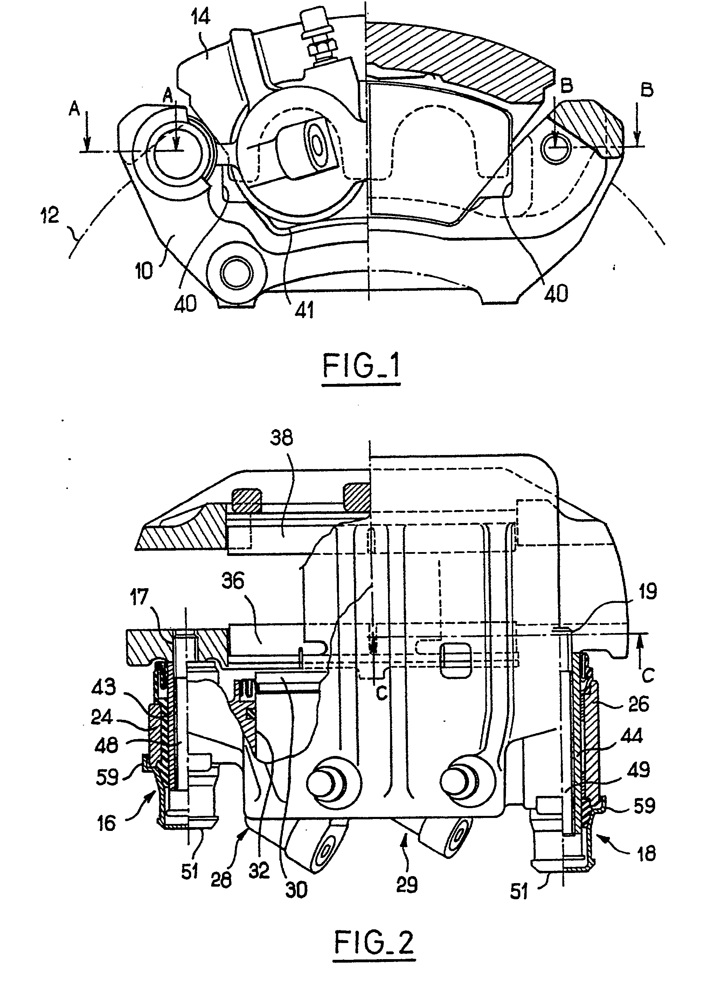

Le frein à disque représenté sur les Figures 1 et 2 comporte un support 10 prévu pour être associé à une partie fixe du véhicule et constitué, dans le mode de réalisation représenté, par une plaque disposée au voisinage d'un disque 12 prévu pour être associé en rotation à une roue du véhicule (non représentée). Le support fixe 10 reçoit en coulissement un étrier mobile 14 chevauchant le disque. L'étrier coulisse sur le support fixe au moyen d'organes de coulissement tels que des colonnettes axiales 16 et 18 circonférentiellement espacées dont les axes sont sensiblement parallèles à l'axe du disque 12. Les colonnettes 16 et 18 sont disposées entre le support fixe 10 et des bras 24 et 26 de l'étrier 14. L'étrier 14 comporte des moyens d'actionnement 28, 29 constitués chacun oar un moteur de frein hydraulique comprenant un piston 30, monté coulissant dans un alésage 32 défini dans l'étrier 14, sensible à la pression régnant dans une chambre de commande susceptible d'être reliée à une source de pression telle que, par exemple le maître-cylindre d'un véhicule. Le piston 30 est disposé de façon à solliciter directement un premier élément de friction 36 contre une première face du disque 12 lorsque le fluide sous pression est admis dans la chambre de commande. L'étrier 14 se déplace alors par réaction et coulisse sur les colonnettes 16 et 18 pour venir solliciter un second élément de friction 38 contre l'autre face du disque 12. Comme le montre en particulier la Figure 1, l'élément de friction 36 est supporté en coulissement et en ancrage par des bords circonférentiellement espacés 40 d'une ouverture 41 ménagée dans le support fixe 10. D'une manière identique l'élément de friction 38 est également reçu en ancrage et en coulissement sur le support fixe 10. Comme le montre plus particulièrement la Figure 2, les deux colonnettes 16 et 18 sont montées sur le support fixe 10 par une partie filetée 17,19 respectivement. Plus précisément, les colonnettes 16 et 18 qui permettent le coulissement de l'étrier, sont constituées chacune par une bague 43,44 centrée sur un boulon 48,49 vissé en 17,19 sur le support fixe, respectivement.

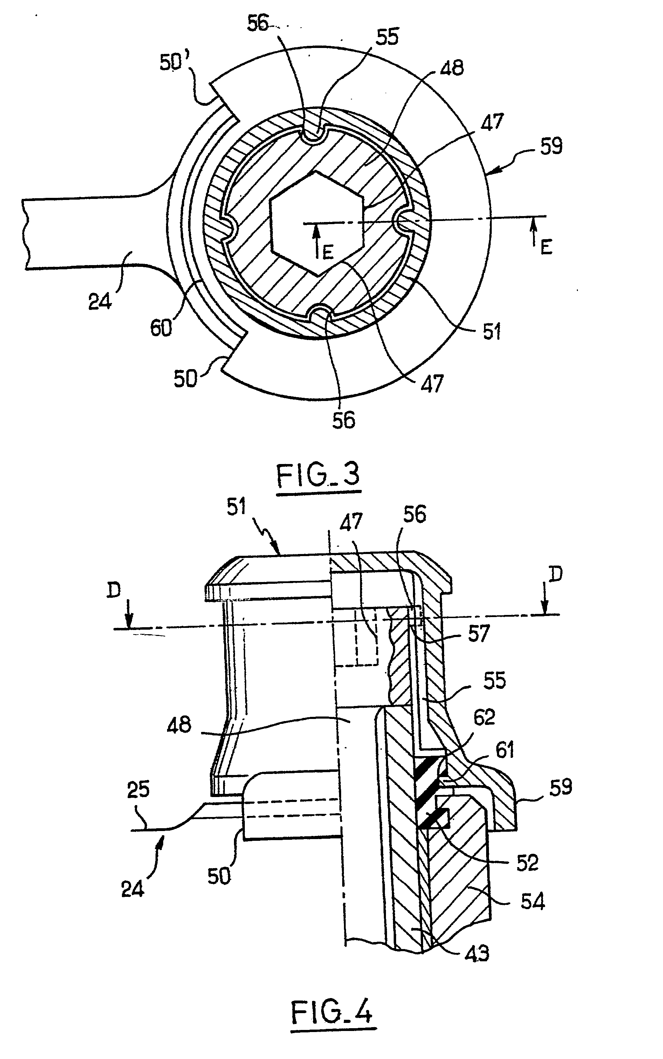

On se réfère aux Figures 3 et 4 où l'on a représenté le dispositif suivant l'invention, incorporé à la tête de la colonnette 16. Il est clair que la tête de la colonnette 18 est équipée d'un dispositif identique qui ne sera donc pas décrit.

Sur ces figures, il apparaît que le dispositif suivant l'invention comprend un capuchon 51 inséré sur la tête du boulon 48. On remarquera incidemment que cette tête de boulon présente une empreinte creuse hexagonale 47. Cette empreinte permet de fixer par vissage sur le support 10 l'ensemble bague 43 - boulon 48, à l'aide d'une clé (non représentée).

Le capuchon 51 présente une partie cylindrique creuse munie de nervures axiales 55 régulièrement réparties sur l'intérieur de sa paroi cylindrique intérieure. Sur la Figure 3 il apparaît que ces nervures 55 sont complémentaires d'encoches 56 découpées sur la périphérie d'une collerette de la tête du boulon 48. En poussant le capuchon sur la tête du boulon de manière que les nervures de l'un passent dans les encoches de l'autre, on assure le couplage en rotation de ces deux pièces.

Suivant l'invention, la base du capuchon 51 s'évase radialement en prenant la forme d'une jupe 59 qui ne s'étend pas sur toute la périphérie du capuchon, mais seulement sur un secteur circulaire. La jupe présente ainsi une découpe 60 en arc de cercle, limitée par des butées 50, 50'. Cette jupe descend plus bas (du point de vue de la Figure 4) que la surface supérieure 25 du bras 24 qui est adjacente à la colonnette 16, alors que la découpe 60 de cette jupe dégage un passage pour ce bras, qui passe entre les butées 50,50' lorsqu'on insère le capuchon sur la tête de boulon, dans une orientation convenable. Il est clair, à ce propos, que l'extension circulaire de la découpe 60 est liée d'un part à l'épaisseur du bras 24 (du point de vue de la Figure 3), mais aussi à la périodicité spatiale des nervures et encoches 55,56 de couplage du capuchon et de la tête du boulon, pour permettre l'insertion du capuchon sur la tête du boulon malgré des variations de serrage du filetage du boulon.

On décrira maintenant le fonctionnement du dispositif suivant l'invention en supposant que des vibrations, par exemple, provoquent un désserrage du boulon 48 dans le sens contraire de celui des aiguilles d'une montre (du point de vue de la Figure 3). Il apparaît immédiatement que la tête du boulon entraîne dans sa rotation le capuchon 51 jusqu'à ce que la butée 50', qui limite du côté amont la découpe 60 de la jupe 59 du capuchon, vienne porter sur la face adjacente de la partie 25 du bras 24. Le dévissage du boulon 48 est alors empêché de se poursuivre, après un désserrage d'une fraction du tour seulement. La chute et la perte de la colonnnette est ainsi rendue impossible, ce qui prévient toute insécurité de ce point de vue et tout dégât éventuel infligé au frein ou à la roue associée.

On peut améliorer la fixation axiale du capuchon sur la tête de colonnette en prévoyant une liaison annulaire par nervure 61 et gorge 62. La gorge 62 peut, suivant un mode de réalisation de l'invention, être creusée dans un joint d'étanchéité 52 glissé sur la bague 43. Le capuchon étant moulé dans une matière plastique convenable, on pousse celui-ci sur la tête de colonnette de manière que la nervure annulaire 61 passe élastiquement dans la gorge 62, pour solidariser axialement le capuchon et la colonnette, à la manière de nombre d'obturateurs classiques de récipients. Le démontage du capuchon s'opère alors manuellement ou bien à l'aide d'un outil spécialisé.

Bien entendu, l'invention n'est pas limitée au mode de réalisation décrit et représenté qui n'a été décrit qu'à titre d'exemple. Ainsi le couplage en rotation du capuchon et de la tête de boulon pourrait être obtenu à l'aide d'une partie telle qu'un doigt venu de moulage avec le capuchon et s'adaptant complémentairement à l'empreinte 47 hexagonale de la tête de boulon.

De même le capuchon pourrait n'être pas entièrement amovible par rapport à la tête de colonnette, mais seulement mobile axialement sur celle-ci, pour engager ou dégager la découpe de la jupe et la partie 25 du bras 24.

Il est clair aussi que les nervures et encoches du mode de réalisation du dispositif suivant l'invention décrit ci-dessus, pourraient être inversées en position ou remplacées par tout couple de creux et de pleins susceptibles de remplir les mêmes fonctions.

De même, le dispositif suivant l'invention pourrait être adapté à une colonnette vissée sur l'étrier d'un frein à disque et reçue à coulissement dans un support fixe.

**Revendications**

1. Frein à disque à étrier (14) coulissant sur un support fixe (10) et comportant deux éléments de friction (36, 38) reçus dans ledit support fixe et susceptibles de venir en engagement de friction avec les faces opposées d'un disque (12) tournant sous l'action d'un moteur de frein (30, 32) agissant directement sur l'un des éléments de friction et agissant sur l'autre élément de friction par réaction au travers de l'étrier coulissant (14), un organe de coulissement (16, 18) étant fixé par vissage d'une partie filetée sur l'étrier (14) ou le support fixe (10), cet organe étant reçu en coulissement dans un alésage correspondant formé dans le support fixe (10) ou l'étrier (14), respectivement, caractérisé en ce qu'il comprend un dispositif de sécurité au dévissage dudit organe de coulissement (16, 18) comportant un capuchon (51) monté coaxialement sur l'organe de coulissement de manière à être solidaire en rotation de cet organe et des moyens de butée (50, 50') répartis entre le capuchon et le corps du frein de manière qu'une rotation limitée de l'organe de coulissement à partir de sa position de vissage serré, provoque la mise en butée de ces moyens (50, 50') et l'arrêt du dévissage de l'organe.

2. Frein à disque selon la revendication 1, caractérisé en ce que lesdits moyens de butée comprennent une jupe (59) débordant radialement du corps du capuchon, cette jupe présentant une découpe (60) en arc de cercle dont l'extrémité amont, dans le sens de dévissage de l'organe, constitue une surface de butée propre à coopérer avec une surface de butée associée du frein pour arrêter la rotation de cet organe dans ce sens.

3. Frein à disque selon l'une quelconque des revendications 1 et 2, caractérisé en ce que le capuchon (51) et l'organe de coulissement (16; 18) sont solidarisés en rotation par la coopération de creux et de pleins (55, 56) complémentaires à emboîtement axial.

4. Frein à disque selon la revendication 3, caractérisé en ce que lesdits creux et pleins présentent une périodicité circulaire et en ce que l'ouverture angulaire de la découpe de la jupe du capuchon est fonction de cette périodicité.

5. Frein à disque selon l'une quelconque des revendications 3 et 4, caractérisé en ce que l'organe de coulissement comprend une tête de boulon solidaire de la partie filetée, cette tête de boulon présentant des creux ou pleins axiaux sur sa surface périphérique, complémentaires de pleins ou creux, respectivement, formés sur une paroi cylindrique interne du capuchon.

6. Frein à disque selon l'une quelconque des revendication 3 et 4, caractérisé en ce que l'organe de coulissement comprend une tête de boulon à section polygonale régulière solidaire de la partie filetée et en ce que le capuchon comprend une partie complémentaire de cette tête pour assurer par emboîtement le couplage en rotation du capuchon de la tête.

7. Frein à disque selon l'une quelconque des revendications précédentes, caractérisé en ce que le capuchon comprend une nervure ou une gorge annulaire (61, 62) complémentaire d'une gorge ou nervure annulaire (62, 61) de l'organe de coulissement, respectivement, pour assurer le couplage axial du capuchon et de l'organe, ces nervure et gorge (61, 62) pouvant être engagées ou dégagées par élasticité.

8. Frein à disque selon la revendication 7, caractérisé en ce que l'une de ces gorge et nervure est formée sur un joint d'étanchéité formant partie de l'organe de coulissement.

## Patentansprüche

1. Sattelscheibenbremse (14), deren Sattel auf einem festen Träger (10) gleitet, mit zwei Reibungsteilen (36, 38), die in diesem festen Träger aufgenommen sind und dazu bestimmt sind, mit den einander gegenüberliegenden Flächen einer rotierenden Scheibe (12) unter der Wirkung eines Bremsantriebs (30, 32) in Reibungseingriff zu kommen, der direkt auf eines der Reibungsteile einwirkt und auf das andere Reibungsteil mittels Reaktion durch den Gleitsattel (14) hindurch einwirkt, wobei ein Gleitorgan (16, 18) durch Aufschrauben eines Gewindeteils auf den Sattel (14) oder den festen Träger (10) befestigt ist und dieses Organ in einer entsprechenden Bohrung verschiebbar aufgenommen ist, die im festen Träger (10) beziehungsweise im Sattel (14) ausgebildet ist, dadurch gekennzeichnet, daß sie eine Sicherung gegen das Abschrauben dieses Gleitorgans (16, 18), die eine Kappe (51) umfaßt, die auf dem Gleitorgan koaxial so angebracht ist, daß sie mit diesem Organ drehfest verbunden ist, und Anschlagmittel (50, 50') aufweist, die zwischen der Kappe und dem Bremsgehäuse so verteilt sind, daß eine begrenzte Drehung des Gleitorgans von seiner festgezogenen Einschraubstellung aus das Anschlagen dieser Mittel (50, 50') und das Aufhalten des Organabschraubens bewirkt.

2. Scheibenbremse nach Anspruch 1, dadurch gekennzeichnet, daß diese Anschlagmittel einen Mantel (59) umfassen, der radial vom Körper der Kappe hervorsteht, wobei dieser Mantel (59) einen kreisbogenförmigem Ausschnitt (60) aufweist, dessen in der Abschraubrichtung des Organs oberhalb gelegenes Ende eine Anschlagfläche bildet, die dazu geeignet ist, mit einer der Bremse zugeordneten Anschlagfläche zusammenzuwirken, um die Drehung dieses Organs in dieser Richtung anzuhalten.

3. Scheibenbremse nach einem der Ansprüche 1 und 2, dadurch gekennzeichnet, daß die Kappe (51) und das Gleitorgan (16; 18) durch das Zusammenwirken sich ergänzender axial ineinanderschiebbarer Vertiefungen und Erhöhungen (55, 56) drehfest verbunden sind.

4. Scheibenbremse nach Anspruch 3, dadurch gekennzeichnet, daß diese Vertiefungen und Erhöhungen eine Kreisperiodizität aufweisen und daß die Winkelöffnung des Kappenmantelausschnitts von dieser Periodizität abhängig ist.

5. Scheibenbremse nach einem der Ansprüche 3 und 4, dadurch gekennzeichnet, daß das Gleitorgan einen Bolzenkopf umfaßt, der mit dem Gewindeteil fest verbunden ist, wobei dieser Bolzenkopf auf seiner Umfangsfläche axiale Vertiefungen oder Erhöhungen aufweist, welche Erhöhungen beziehungsweise Vertiefungen ergänzen, die auf einer inneren Zylinderwand der Kappe ausgebildet sind.

6. Scheibenbremse nach einem der Ansprüche 3 und 4, dadurch gekennzeichnet, daß das Gleitorgan einen mit dem Gewindeteil fest verbundenen Bolzenkopf mit regelmäßigem polygonalen Querschnitt umfaßt und daß die Kappe einen ergänzenden Teil dieses Kopfes enthält, um die Drehkopplung der Kopfkappe mittels Ineinanderschieben sicherzustellen.

7. Scheibenbremse nach einem der vorausgehenden Ansprüche, dadurch gekennzeichnet, daß die Kappe eine Ringrippe oder eine Ringnut (61, 62) enthält, die eine Ringnut beziehungsweise Ringrippe (62, 61) des Gleitorgans ergänzt, um die Axialkopplung der Kappe und des Organs sicherzustellen, wobei diese Rippe und Nut (61, 62) elastisch eingedrückt oder freigegeben werden können.

8. Scheibenbremse nach Anspruch 7, dadurch gekennzeichnet, daß von der Nut und der Rippe die eine auf einem Dichtring ausgebildet ist, der einen Teil des Gleitorgans bildet.

## Claims

1. Disc brake with a caliper (14) sliding on a stationary support (10) and comprising two friction components (36, 38) received in the said stationary support and capable of frictionally engaging the opposite faces of a rotating disc (12) under the action of a brake motor (30, 32) acting directly on one of the friction components and acting on the other friction component by reaction through the sliding caliper (14), a sliding member (16, 18) being fastened by screwing a threaded part onto the caliper (14) or the stationary support (10), this member being slidably received into a corresponding bore formed in the stationary support (10) or the caliper (14), respectively, characterized in that it comprises a safety device against unscrewing of the said sliding member (16, 18) comprising a cap (51) mounted coaxially on the sliding member so as to be rotatably integral with this member, and stop means (50, 50') distributed between the cap and the body of the brake so that a limited rotation of the sliding member from its tightly screwed position, causes these means (50, 50') to come into abutment and the unscrewing of the member to be stopped.

2. Disc brake according to Claim 1, characterized in that the said stop means comprise a skirt (59) projecting radially from the body of the cap, this skirt having a cutout (60) in the shape of an arc of a circle of which the upstream end, in the direction of unscrewing of the member, forms an abutment surface designed to cooperate with an associated abutment surface of the brake in order to stop the rotation of this member in this direction.

3. Disc brake according to either of Claims 1 and 2, characterized in that the cap (51) and the sliding member (16; 18) are made rotatably integral by the cooperation of complementary hollows and projections (55, 56) interlocking axially.

4. Disc brake according to Claim 3, characterized in that the said hollows and projections have a circular periodicity and in that the angular opening of the cutout in the skirt of the cap depends on this periodicity.

5. Disc brake according to either of Claims 3 and 4, characterized in that the sliding member comprises a bolt head integral with the threaded part, this bolt head having axial hollows or projections on its peripheral surface, which are complementary to the projections or hollows, respectively, formed on the internal cylindrical wall of the cap.

6. Disc brake according to either of Claims 3 and 4, characterized in that the sliding member comprises a bolt head of regularly polygonal cross-section integral with the threaded part and in that the cap comprises a part complementary to this head in order to ensure by interlocking the rotational coupling of the cap of (sic) the head.

7. Disc brake according to any one of the preceding claims, characterized in that the cap comprises an annular rib or groove (61, 62) complementary to an annular groove or rib (62, 61) on the sliding member, respectively, in order to ensure the axial coupling of the cap to the member, it being possible for this rib and this groove (61, 62) to engage or to disengage resiliently by elasticity.

8. Disc brake according to Claim 7, characterized in that either this groove or this rib is formed on a leakproof seal forming part of the sliding member.

## FIG_1

## FIG_2

EP 0 253 707 B1

FIG_3

FIG_4